# EUROPEAN PATENT SPECIFICATION

(11) **EP 2 030 337 B1**
(45) Date of publication and mention of the grant of the patent: **09.09.2009**
(21) Application number: 06806614.1
(22) Date of filing: 30.10.2006
(51) Int. Cl.: H04B 5/00, H04R 25/00

(54) **COMMUNICATION SYSTEM AND METHOD OF OPERATING THE SAME**
KOMMUNIKATIONSSYSTEM UND VERFAHREN ZU SEINEM BETRIEB
SYSTÈME DE COMMUNICATION ET PROCÉDÉ DE MISE EN OEUVRE DE CE DERNIER

(43) Date of publication of application: 04.03.2009
(73) Proprietor: Phonak AG, 8712 Stäfa (CH)
(72) Inventor: DIJKSTRA, Evert, 2046 Fontaines (CH); MARQUIS, François, 1720 Corminboeuf (CH)
(74) Representative: Schwan - Schwan - Schorer
(86) International application number: PCT/EP2006/010426
(87) International publication number: WO 2008/052575

(56) References cited:
- EP-A- 1 250 026
- WO-A-92/17991
- WO-A-98/52295
- DE-B3- 10 305 833
- US-A- 5 774 791
- US-B1- 6 424 820

## Description

The present invention relates to a communication system comprising a transmission unit to be worn at a user's body at or below the user's neck for transmitting audio signals via an inductive link, and an earpiece to be worn at least in part in the user's ear canal including a receiver unit for receiving audio signals via the inductive link from the transmission unit, an audio signal processing unit for processing audio signals from the receiver unit and a loudspeaker stimulating the user's hearing according to the processed audio signals.

Such systems are typically used for covert security applications, wherein the inductive receiver unit typically is so small that it can be placed completely in the user's ear canal and thus can act as a hidden wireless loudspeaker for a radio frequency system, with the audio signals transmitted by the transmission unit being supplied by a radio frequency (RF) receiver device, such as a walkie-talkie or a mobile phone, worn by the user, to which device the transmission unit may be connected via a cable. The transmission unit typically comprises an inductive loop which is worn around the user's neck, around the user's arm or over the user's shoulder and which serves as the antenna. The inductive loop generates a magnetic field received by the receiver unit placed in the user's ear canal. Typically, the amplitude of the inductive field is modulated directly by the audio signals to be transmitted over the inductive link ("base band modulation"). For such a based band modulation the transmitted frequencies inherently are in the audio signal range.

However, nowadays many magnetic perturbations are generated in the audio band by modem electronics. Typical sources of such magnetic perturbations in the audio band are cars, tramways, trains, anti-theft systems, airport scanner systems, neon lights, 50/60 Hz of AC power lines, PC screens and TV devices. Such sources of magnetic perturbations are often present in areas where covert security is present and needed. The level of perturbation often is so high that the use of an inductive receiver is no more possible for covert applications. This is particularly the case in modem cars, tramways, airplanes and super markets with anti-theft systems. Another disadvantage of based band inductive systems is that due to the lack of coding or modulation it can be relatively easily caught by a third person placed just near the transmission unit (in contrast to radio frequency links, inductive links have a relatively short range).

US 5,774,791 relates to a wireless communication system comprising a transmission unit worn around the user's neck including an inductive loop, a RF receiver for receiving audio signals from a remote microphone through a RF transmission system, and' a time variant modulation (TVM) pulse generator having a pulse repetition rate which is at least 2.6 times the frequency of the highest audio signal frequency component. The system further comprises a receiver unit which comprises a TVM demodulator and which may be configured as a behind the ear (BTE) hearing aid or in the ear (ITE) hearing aid.

EP 1 250 026 A1 relates to a binaural hearing assistance system comprising a inductive link between the two hearing aids or between the hearing aids and a remote programming device. The inductive link may be modulated, such as by alternate mark inversion (AMI), TVM, NRZ and RZ.

EP 1 619 926 A1 relates to a base band inductive link to an earpiece receiver wherein the interference with magnetic disturbators is addressed by digital signal processing in the receiver.

DE 103 05 833 B3 relates to a data transmission unit for hearing aids for creating an inductive link which may be amplitude modulated or FSK (frequency shift keying) modulated.

It is an object of the invention to provide for a communication system having an inductive link from a body-worn audio signal transmission unit to an earpiece comprising a loudspeaker, which can be used also in the presence of sources of magnetic perturbations and which is nevertheless relatively easy to implement. It is also an object of the invention to provide for a method of operating such communication system.

These objects are achieved by a communication system as defined in claim 1 and a method as defined in claim 15, respectively.

The invention is beneficial in that, by providing for an amplitude modulation (AM) inductive link having a carrier frequency of from 100 kHz to 30 MHz, the link is less susceptible to magnetic perturbations which may be present primarily within the audio frequency range in many everyday surroundings, such as cars, tramways, trains, airports, supermarkets and stores, etc. Thus the system according to the invention can be successfully used in many areas, and in particular also in most areas where covert security is needed. On the other hand, an AM inductive link is relatively easy to implement, as compared for example to a TVM inductive link, and does not need a specific integrated circuit (IC).

Preferred embodiments of the invention are defined in the dependent claims.

Examples of the invention will be described by reference to the attached drawings, wherein:
- Fig. 1: is a schematic representation of the use of a communication system according to the invention for communication between two persons;
- Fig: 2: is a schematic view of the communication system of Fig. 1 worn by one of the two persons;
- Fig. 3: is a comparison of the spectrum of an audio signal base band link according to the prior art and an example of an AM audio signal link according to the invention;
- Fig. 4: is a block diagram of an embodiment of the transmission unit of a communication system according to the invention;
- Fig. 5: is a block diagram of another embodiment of the transmission unit of a communication system according to the invention; and
- Fig. 6: is a block diagram of one embodiment of the receiver unit of a communication system according to the invention.

A preferred application of the present invention are miniature inductive transmission systems which are used when discrete communication is needed, for example, for security applications. A miniature inductive receiver unit is placed as an earpiece in or at the user's ear for acting as a wireless loudspeaker for an RF system, with the audio signals transmitted via the RF system being sent from a transmission unit worn at the user's body at or below the user's neck via an inductive link to the inductive receiver. Preferably the earpiece is adapted to be worn completely in the ear canal. However, in some applications the earpiece may be designed as a miniature BTE (behind-the-ear) device which comprises an internal loudspeaker and a sound tube extending from the internal loudspeaker into the ear canal or, alternatively, an external loudspeaker arranged in the ear canal and conntected to the BTE-part by wires extending into the ear canal. Thus, in the case of a miniature BTE, only the sound tube or the external loudspeaker is worn in the user's ear canal.

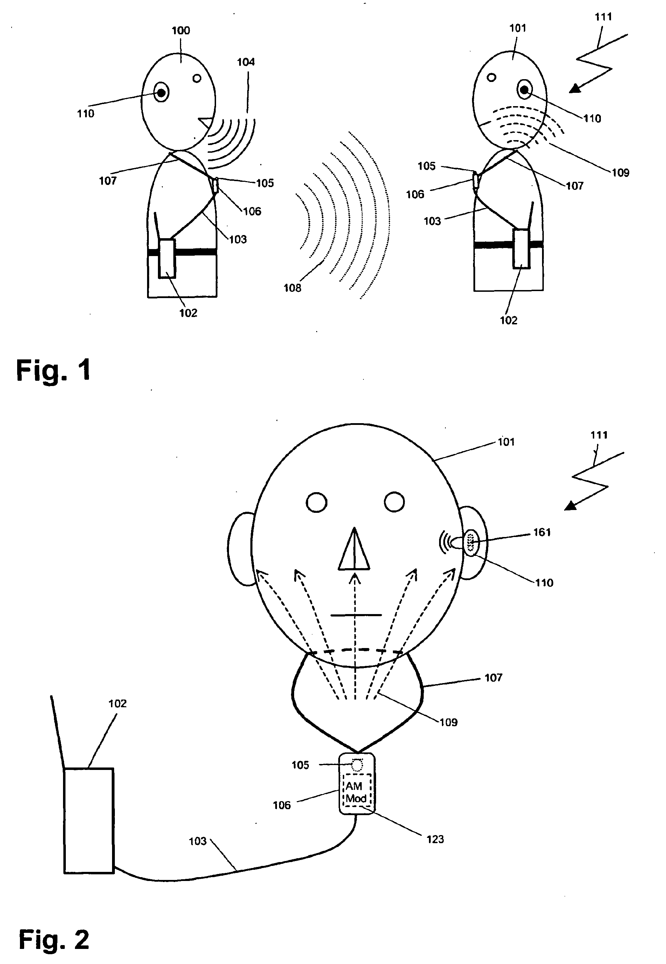

A typical application using such a miniature inductive communication system is shown in Figs. 1 and 2.

A first user 100 uses a first communication system comprising a RF communication device 102, such as a walkie-talkie, for exchanging audio signals via a bi-directional RF link 108, for example a frequency modulation (FM) link, with a RF communication device 102 used by a second user 101, a transmission unit 106, and an earpiece 110. The RF communication device 102 may be worn, for example, at a belt around the user's waist.

The transmission unit 106 is electrically connected to the RF communication device 102 via a cable 103 which supplies the audio signals received by the RF communication device 102 to the transmission unit 106 and which serves to power the transmission unit 106. In addition, the cable 103 serves to supply audio signals captured by a microphone 105 of the transmission unit 106 to the RF communication device 102 which transmits them over the bidirectional RF link 108 to another RF communication device 102 used by the second user 101.

The transmission unit 106 is worn at a loop 107 around the user's neck, which also serves as an inductive loop antenna for transmitting the audio signals supplied by the RF communication device 102 to the earpiece 110 via an inductive link 109. The microphone 105 serves to capture the voice 104 of the user 100. The earpiece 110 is worn at least partially, and preferably completely, in the user's ear canal. If the earpiece is designed, as mentioned before, as a miniature BTE device, only the sound tube or the external loudspeaker is worn in the user's ear canal.

The second communication system used by the second user 101 is fully symmetrical to that used by the user 100. With the communication system of Fig. 1 the user 100 may communicate with the user 101 in that the voice 104 of the user 100 is captured by the microphone 105, the corresponding audio signals are transmitted via the RF link 108 from the RF communication device 102 of the user 100 to the RF communication device 102 of the user 101, the audio signals received there are supplied via the cable 103 to the transmission unit 106 of the user 101, and from there via the inductive link 109 to the earpiece 110 of the user 101, which renders the audio signals audible for the user 101 via the built-in miniature loudspeaker.

In many environments, such as in cars, tramways, trains, airports, supermarkets, etc., magnetic perturbations 111, mainly in the audio signal bandwidth, may be present. In order to avoid interference of such magnetic perturbations 111 with the inductive link 109, the inductive link 109 is designed as a AM link having a carrier frequency of from 100 kHz to 30 MHz, which range is far above the audio signal frequency range in which the magnetic perturbations primarily occur.

In some applications the RF communication device 102 and the transmission unit 106 could form an integrated device rather than being connected by a cable 103. Alternatively, the cable 103 could be replaced by a bidirectional wireless link such as a Bluetooth link. In this case, a power supply must be integrated in the transmission unit 106.

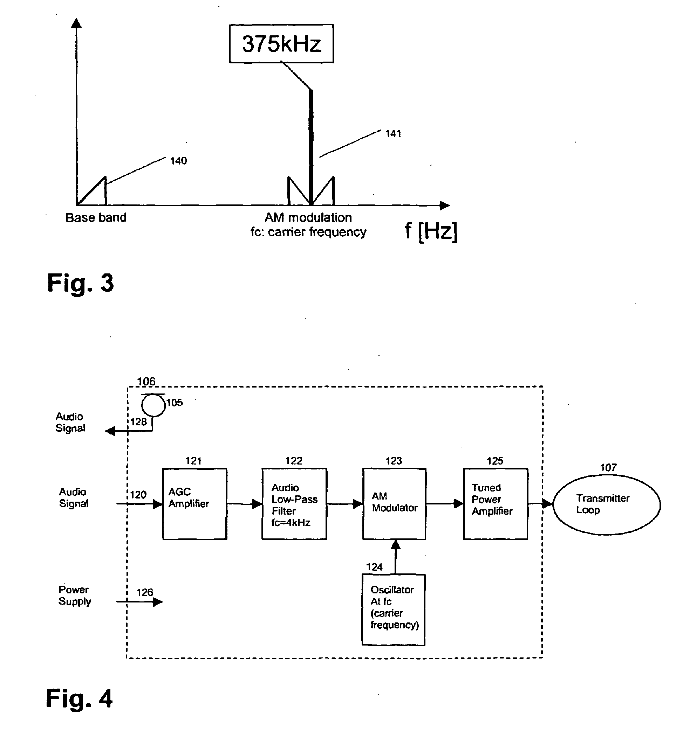

In Fig. 3 the typical spectrum of an inductive base band audio link 140 of the prior art is compared to a AM inductive audio link 141 according to the invention, with an example having a carrier frequency of 375 kHz being shown. The based band link 140 has a typical spectrum ranging from, for example, 200 Hz to 3.2 kHz (which is a typical audio range for walkie-talkies), whereas the spectrum of the AM link 141 has a peak at the carrier frequency, accompanied by two side bands representing the carrier frequency plus and minus the respective audio signal frequencies.

A first example of the structure of the transmission unit 106 is shown in Fig. 4. As already mentioned above, the transmission unit 106 comprises a microphone 105 for capturing the user's voice, with the audio signals 128 captured by the microphone 105 being supplied to the RF communication device 102 via the cable 103.

The audio signals received by the RF communication device 102 are supplied to the transmission unit 106 likewise via the cable 103. These audio signals 120 are supplied to an automatic gain control (AGC)-amplifier 121 which ensures that the inductive field of the inductive link 109 established by the transmitter loop 107 is never over-modulated. After the AGC-amplifier 121 the audio signals are filtered by a low-pass filter 122 in order to reduce the AM modulated audio signal bandwidth. Typically, the filter 122 will have a cut-off frequency of about 4 kHz, resulting in a modulated audio signal bandwidth of about 8 kHz. This is sufficient, since, as already mentioned above, the RF communication device 102, such as a walkie-talkie, will have an audio signal bandwidth of for example from 200 Hz to 3.2 kHz. The filtered audio signals are than modulated by an AM modulator 123 using an oscillator 124 to generate the AM modulated signal at the carrier frequency determined by the oscillator 124. The AM modulated signal then is amplified, filtered and transmitted to the transmitter loop 107 by a tuned power amplifier 125. This will ensure a maximum transmitted inductive field 109 with a minimum of harmonics.

As already mentioned above, the cable 103 also serves as a power supply 126 for the transmission unit 106.

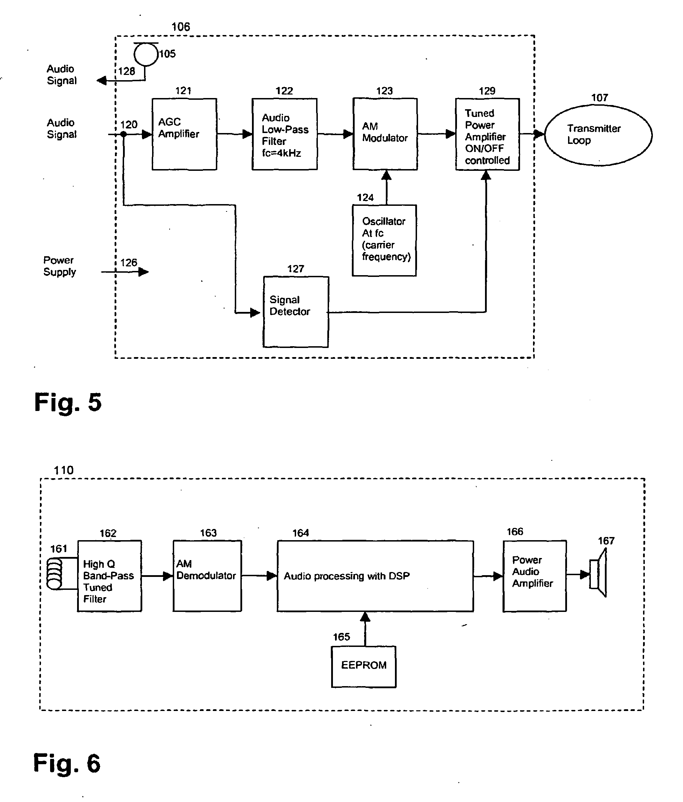

An alternative embodiment of the transmission unit 106 is shown in Fig. 5, wherein the tuned power amplifier 125 is activated only when actually an audio signal 120 is received from the RF communication device 102. To this end, the audio signals 120 are not only supplied to the AGC-amplifier 121 but also to a signal detector 127 which serves to detect whether an audio signal 120 is present at the cable 103 or not. Detection of the presence of an audio signal 120 in a very fast manner with an attack time of preferably less then 10 msec. Once the presence of an audio signal 120 has been detected by the signal detector 127, the signal detector 127 activates, i.e. turns on, the tuned power amplifier 125. Once the signal detector 127 has detected that no audio signal 120 is present, it will disable the transmission unit 106 by deactivating, i.e. turning off, the power amplifier 125. Such deactivation of the power amplifier 125 occurs with a release time constant of preferably a few 100 msec, for example from 100 to 3000 msec, in order to avoid that the power amplifier 125 is turned off during short speech pauses.

An example of the earpiece 110, i.e. the receiver unit, is shown in Fig. 6.

The inductive field of the inductive link 109 and eventually also magnetic perturbations 111, if present, are picked up by the inductive antenna 161 which is part of a band-pass tuned filter 162 having a high quality (Q) factor (e.g. 70) in order to provide for a selective filtering of perturbations outside the frequency range of the modulated audio signals of the inductive link 109, i.e. the carrier frequency plus and minus the audio signal frequencies. Preferably, the bandwidth of the band-pass filter 161/162 corresponds to the AM-modulated audio signal bandwidth determined by the low-pass filter 122 of the transmission unit 106, i.e. about 8 kHz in the present example (plus and minus 4 kHz). The filtered signal then is demodulated by an AM demodulator 163, with the demodulated audio signal then being processed by a powerful digital signal processor (DSP) 164 which serves to filter out all the remaining perturbations from the useful audio frequency range (which is typically from 200 Hz to 3.2. kHz, as mentioned above). Preferably both time domain and frequency domain signal processing are used so that very strong and efficient band-pass filtering can be achieved. Noise reduction and cancellation techniques also may be applied. Further, a gain model is implemented in the DSP 164 to control the maximum output power delivered to a miniature loudspeaker 167 via a power audio amplifier 166. The various audio signal processing parameters used by the DSP 164 are stored in a non-volatile memory, such as an EEPROM 165.

## Claims

1. A communication system, comprising:
a transmission unit (106) to be worn at a user's body (100, 101) at or below the user's neck for transmitting audio signals (120) via an inductive link (109); and
an earpiece (110) to be worn at least in part in the user's ear canal including a receiver unit (161, 162, 163) for receiving audio signals via said inductive link (109) from the transmission unit (106), an audio signal processing unit (164, 165, 166) for processing audio signals received by the receiver unit (161, 162, 163), and a loudspeaker (166) for stimulating the user's hearing according to the processed audio signals;
wherein said inductive link (109) is an amplitude modulation inductive link having a carrier frequency of from 100 kHz to 30 MHz.

2. The system of claim 1, wherein the transmission unit (106) comprises a low-pass filter (122) for filtering the audio signals (120) prior to undergoing amplitude modulation, which is adapted to ensure that the modulated audio signal bandwidth is less than 10 kHz.

3. The system of one of claims 1 and 2, wherein the transmission unit (106) comprises an antenna designed as an inductive loop (107) to be worn around the user's neck, around the user's arm or over the user's shoulder.

4. The system of one of the preceding claims, wherein the transmission unit (106) comprises an automatic-gain-control amplifier (121) in order to avoid over-modulation of the inductive link (109).

5. The system of one of the preceding claims, wherein the transmission unit (106) comprises a signal detector (127) for detecting the presence of audio signals (120) to be transmitted via the inductive link (109).

6. The system of one of the preceding claims, wherein the receiver unit comprises an antenna (161), an amplitude modulation demodulator (163) and a band-pass filter (161, 162) having a bandwidth substantially equal to the modulated audio signal bandwidth, said band-pass filter(161, 162) being adapted for filtering the signals received by the antenna (161) prior to being demodulated by the demodulator (163).

7. The system of one of the preceding claims, wherein the audio signal processing unit comprises a digital signal processor (164) for processing the audio signals demodulated by a demodulator (163).

8. The system of claim 7, wherein the digital signal processor (164) is adapted to band-pass filter the audio signals demodulated by the demodulator (163).

9. The system of one of claims 7 and 8, wherein the digital signal processor (164) is adapted to process the audio signals demodulated by the demodulator (163) both in time domain and in frequency domain.

10. The system of one of claims 7 to 9, wherein the digital signal processor (164) applies a gain model to control the maximum output power delivered to the loudspeaker (167).

11. The system of one of claims 7 to 10, wherein the audio signal processing unit comprises a non-volatile'memory (165) for storing audio signal processing parameters to be used by the digital signal processor (164).

12. The system of one of the preceding claims, wherein the system comprises a receiver device (102) for receiving audio signals via a wireless link (108), which is connected to or integrated with the transmission unit (106) in order to supply the received audio signals (120) to the transmission unit (106).

13. The system of claim 12, wherein the transmission unit (106) is connected to the receiver device (102) via a cable (103).

14. The system of one of the preceding claims, wherein the earpiece (110) is adapted to be worn completely in the user's ear canal.

15. A method of operating a communication system comprising a transmission unit (106) to be worn at a user's body (100, 101) at or below the user's neck and an earpiece (110) to be worn at least in part in the user's ear canal, comprising
supplying audio signals (120) to the transmission unit (106),
transmitting the audio signals (120) from the transmission unit (106) to the earpiece (110) via an inductive link (109), and
stimulating the user's hearing via the earpiece (110) according to the audio signals received by the earpiece (110),
wherein said inductive link (109) is an amplitude modulation inductive link having a carrier frequency of from 100 kHz to 30 MHz.

## Patentansprüche

1. Kommunikationssystem mit:
einer Sendeeinheit (106) zum Senden von Audiosignalen (120) über eine induktive Verbindung (109), woibei die Senedeinheit am Körper (100, 102) eines Anwenders am oder unterhalb des Halses des Anwenders zu tragen ist; und
einem Ohrstück (110), welches mindestens zum Teil im Gehörgang des Anwenders zu tragen ist und eine Empfängereinheit (161, 162, 163) zum Empfangen von Audiosignalen über die induktive Verbindung (109) von der Sendeeinheit (106), eine Audiosignalverarbeitungseinheit (164, 165, 166) zum Verarbeiten der von der Empfängereinheit (161, 162, 163) empfangenen Audiosignale sowie einen Lautsprecher (166) zum Stimulieren des Gehörs des Anwenders gemäß den verarbeiteten Audiosignalen aufweist;
wobei es sich bei der induktiven Verbindung (109) um eine amplitudenmodulierte induktive Verbindung mit einer Trägerfrequenz von 100 kHz bis 30 kHz handelt.

2. System gemäß Anspruch 1, wobei die Sendeeinheit (106) ein Tiefpassfilter (122) zum Filtern der Audiosignale vor der Amplitudenmodulation aufweist, welches ausgebildet ist, um sicherzustellen, dass die Bandbreite des modulierten Audiosignals weniger als 10 kHz beträgt.

3. System gemäß einem der Ansprüche 1 und 2, wobei die Sendeeinheit (106) eine als induktive Schleife (107) ausgebildete Antenne aufweist, die um den Hals des Anwenders herum, um den Arm des Anwenders herum oder über die Schulter des Anwenders zu tragen ist.

4. System gemäß einem der vorhergehenden Ansprüche, wobei die Sendeeinheit (106) einen selbstregelnden Verstärker (121) aufweist, um eine Übermodulation der induktiven Verbindung (109) zu vermeiden.

5. System gemäß einem der vorhergehenden Ansprüche, wobei die Sendeeinheit (106) einen Signaldetektor (127) zum Detektieren des Vorhandenseins von über die induktive Verbindung (109) zu sendenden Audiosignalen (120) aufweist.

6. System gemäß einem der vorhergehenden Ansprüche, wobei die Empfängereinheit eine Antenne (161), einen Amplitudenmodulationsdemodulator (163) und ein Bandpassfilter (161, 162) mit einer Bandbreite aufweist, die im wesentlichen gleich der Bandbreite des modulierten Audiosignals ist, wobei das Bandpassfilter (161, 162) ausgebildet ist, um die von der Antenne (161) empfangenen Signale vor der Demodulation mittels des Demodulators (163) zu filtern.

7. System gemäß einem der vorhergehenden Ansprüche, wobei die Audiosignalverarbeitungseinheit einen digitalen Signalprozessor (164) zum Verarbeiten der mittels eines Demodulators (163) demodulierten Audiosignale aufweist.

8. System gemäß Anspruch 7, wobei der digitale Signalprozessor (164) ausgebildet ist, um die mittels des Demodulators (163) demodulierten Audiosignale einer Bandpassfilterung zu unterziehen.

9. System gemäß einem der Ansprüche 7 und 8, wobei der digitale Signalprozessor (164) ausgebildet ist, um die mittels des Demodulators (163) demodulierten Audiosignale sowohl im Zeitbereich als auch im Frequenzbereich zu verarbeiten.

10. System gemäß einem der Ansprüche 7 bis 9, wobei der digitale Signalprozessor (164) ein Verstärkungsmodell anwendet, um die an den Lautsprecher (167) abgegebene maximale Ausgangsleistung zu steuern.

11. System gemäß einem der Ansprüche 7 bis 10, wobei die Audiosignalverarbeitungseinheit einen nicht-flüchtigen Speicher (165) zum Speichern der von dem digitalen Signalprozessor (164) zu verwendenden Audiosignalverarbeitungsparameter aufweist.

12. System gemäß einem der vorhergehenden Ansprüche, wobei das System eine Empfängervorrichtung (102) zum Empfangen von Audiosignalen über eine drahtlose Verbindung (108) aufweist, die mit der Sendeeinheit (106) verbunden ist oder in diese integriert ist, um die empfangenen Audiosignale (120) der Sendeeinheit (106) zuzuführen.

13. System gemäß Anspruch 12, wobei die Sendeeinheit (106) über ein Kabel (103) mit der Empfängereinheit (102) verbunden ist.

14. System gemäß einem der vorhergehenden Ansprüche, wobei das Ohrstück (110) ausgebildet ist, um vollständig im Gehörgang des Anwenders getragen zu werden.

15. Verfahren zum Betreiben eines Kommunikationssystems mit einer Transmissionseinheit (106), die am Körper (100, 101) des Anwenders am oder unterhalb des Halses des Anwenders zu tragen ist, sowie einem Ohrstück (110), welches mindestens zum Teil im Gehörgang des Anwenders zu tragen ist, wobei
Audiosignale (120) der Sendeeinheit (106) zugeführt werden,
die Audiosignale (120) von der Sendeeinheit (106) über eine induktive Verbindung (109) an das Ohrstück (110) gesendet werden, und
das Gehör des Anwenders mittels des Ohrstücks (110) gemäß den von dem Ohrstück (110) empfangenen Audiosignalen stimuliert wird,
wobei es sich bei der induktiven Verbindung um eine amplitudenmodulierte induktive Verbindung mit einer Trägerfrequenz zwischen 100 kHz und 30 MHz handelt.

## Revendications

1. Système de communication comprenant :
une unité d'émission (106), devant être portée par l'utilisateur (100, 101) sur le corps, au cou ou en pendentif et destinée à émettre des signaux audio (120) via une liaison inductive (109) ; et
un écouteur (110), devant être porté au moins partiellement dans le canal auriculaire de l'utilisateur, comprenant une unité de réception (161, 162, 163), destinée à recevoir des signaux audio via ladite liaison inductive (109), en provenance de l'unité d'émission (106), une unité de traitement de signaux audio (164, 165, 166), destinée à traiter des signaux audio reçus par l'unité de réception (161, 162, 163), et un haut-parleur (166), destiné à stimuler l'ouïe de l'utilisateur en fonction des signaux audio traités ;
dans lequel ladite liaison inductive (109) est une liaison inductive à modulation d'amplitude ayant une fréquence porteuse comprise entre 100 kHz et 30 MHz.

2. Système selon la revendication 1, dans lequel l'unité d'émission (106) comprend un filtre passe-bas (122), qui est destiné à filtrer les signaux audio (120) avant qu'ils ne subissent la modulation d'amplitude et qui est conçu pour garantir que la bande passante du signal audio modulé sera inférieure à 10 kHz.

3. Système selon l'une des revendications 1 et 2, dans lequel l'unité d'émission (106) comprend une antenne conçue comme une boucle inductive (107) à porter par l'utilisateur autour du cou, autour du bras ou sur l'épaule.

4. Système selon l'une des revendications précédentes, dans lequel l'unité d'émission (106) comprend un amplificateur à commande automatique du gain (121) afin d'éviter une surmodulation sur la liaison inductive (109).

5. Système selon l'une des revendications précédentes, dans lequel l'unité d'émission (106) comprend un détecteur de signaux (127), destiné à détecter la présence de signaux audio (120) à émettre via la liaison inductive (109).

6. Système selon l'une des revendications précédentes, dans lequel l'unité de réception comprend une antenne (161), un démodulateur de modulation d'amplitude (163) et un filtre passe-bande (161, 162) ayant une largeur de bande substantiellement égale à la largeur de bande du signal audio modulé, ledit filtre passe-bande (161, 162) étant conçu pour filtrer les signaux reçus par l'antenne (161) avant qu'ils ne soient démodulés par le démodulateur (163).

7. Système selon l'une des revendications précédentes, dans lequel l'unité de traitement des signaux audio comprend un processeur de signal numérique (164) destiné à traiter les signaux audio démodulés par un démodulateur (163).

8. Système selon la revendication 7, dans lequel le processeur de signal numérique (164) est conçu pour appliquer un filtrage passe-bande aux signaux audio démodulés par le démodulateur (163).

9. Système selon l'une des revendications 7 et 8, dans lequel le processeur de signal numérique (164) est conçu pour traiter les signaux audio démodulés par le démodulateur (163) à la fois dans le domaine temporel et dans le domaine fréquentiel.

10. Système selon l'une des revendications 7 à 9, dans lequel le processeur de signal numérique (164) applique un modèle de gain pour commander la puissance de sortie maximale fournie au haut-parleur (167).

11. Système selon l'une des revendications 7 à 10, dans lequel l'unité de traitement des signaux audio comprend une mémoire non volatile (165) destinée à stocker des paramètres de traitement des signaux audio à utiliser par le processeur de signal numérique (164).

12. Système selon l'une des revendications précédentes, dans lequel le système comprend un dispositif récepteur (102), destiné à recevoir des signaux audio via une liaison sans fil (108), qui est connecté ou intégré à l'unité d'émission (106) afin de fournir les signaux audio reçus (120) à l'unité d'émission (106).

13. Système selon la revendication 12, dans lequel l'unité d'émission (106) est connectée au dispositif récepteur (102) via un câble (103).

14. Système selon l'une des revendications précédentes, dans lequel l'écouteur (110) est conçu pour être porté entièrement dans le canal auriculaire de l'utilisateur.

15. Procédé de fonctionnement d'un système de communication comprenant une unité d'émission (106) devant être portée par l'utilisateur (100, 101) sur le corps, au cou ou en pendentif, et un écouteur (110) devant être porté au moins partiellement dans le canal auriculaire de l'utilisateur, comprenant les étapes consistant à :
fournir des signaux audio (120) à l'unité d'émission (106) ;
émettre les signaux audio (120) entre l'unité d'émission (106) et l'écouteur (110), via une liaison inductive (109) ; et
stimuler l'ouïe de l'utilisateur via l'écouteur (110) en fonction des signaux audio reçus par l'écouteur (110) ;
dans lequel ladite liaison inductive (109) est une liaison inductive à modulation d'amplitude ayant une fréquence porteuse comprise entre 100 kHz et 30 MHz.
